# EUROPEAN PATENT SPECIFICATION

(11) **EP 1 652 883 B1**
(45) Date of publication and mention of the grant of the patent: **05.10.2016**
(21) Application number: 04747981.1
(22) Date of filing: 27.07.2004
(51) Int. Cl.: C08L 33/00, C08K 5/00

(54) **TWO-PACK TYPE ACRYLIC SOL COMPOSITION**
ZWEIKOMPONENTIGE ACRYLSOLZUSAMMENSETZUNG
COMPOSITION DE SOL ACRYLIQUE DOUBLE

(30) Priority: 29.07.2003 JP 2003281725
(43) Date of publication of application: 03.05.2006
(73) Proprietor: MITSUBISHI RAYON CO., LTD., Tokyo 100-8253 (JP)
(72) Inventor: KASAI, Toshihiro, c/o Corporate Research Lab., Chiyoda-ku Tokyo 100-8253 (JP); SAIKI, Shinji, c/o Toyohashi Plants, Chiyoda-ku Tokyo 100-8253 (JP)
(74) Representative: Ter Meer Steinmeister & Partner
(86) International application number: PCT/JP2004/010668
(87) International publication number: WO 2005/010095

(56) References cited:
- EP-A- 0 184 718
- EP-A- 0 552 469
- GB-A- 1 573 476
- JP-A- 1 168 776
- JP-A- 3 281 683
- JP-A- 7 331 185
- JP-A- 9 053 051
- JP-A- 62 185 772
- US-A- 4 119 592
- US-A- 4 195 140
- US-A- 4 525 234
- US-A- 4 923 945
- US-B1- 6 495 626

## Description

### FIELD OF THE INVENTION

The present invention relates to a two-pack type composition among plastisol compositions in which fine particles of a thermoplastic polymer are dispersed in a plasticizer. For further details, the present invention relates to a plastisol composition of which gelation speed after mixing of two components is extremely fast and satisfactory gelation condition is obtained without heating and use of said plastisol composition.

### BACKGROUND ART

A plastisol in which fine particles of a thermoplastic resin are dispersed in a plasticizer is easy for works such as coatings and moldings because of having high flowability at room temperature and gelates in a short time by heating to provide coating films or molded articles.

It is widely employed in the various fields of industries putting these characteristics to practical use. As for the typical examples, vinyl chloride-type plastisol (hereinafter referred to as "vinyl chloride sol") using vinyl chloride resin and acrylic-type plastisol (hereinafter referred to as "acrylic sol") using acrylic resin are exemplified.

Furthermore, for these plastisols, high strengthis required for the coating films after gelation by heating. For example, an acrylic sol comprising a high molecular acrylic monomer to satisfy both of the strength of coating films and the pot life at room temperature is disclosed in patent document 1 (Japanese Patent Laid-Open No. 2002-30194).

However, in recent years, the material having extremely fast gelation speed far exceeding that of conventional plastisols has been required in order to increase efficiency of a production line for processing plastisol, to aim at innovation thereof or the like.

For example, conventional plastisols have gelation speed over a long period of time from a few days to few months at room temperature from a point of pot life, whereas a request from the industry of recent years is varying to give extremely fast gelling capability having gelation time from several minutes to one hour or less at room temperature. There is a limit for the promotion of efficiency of a production line as not being able to make gelate in one hour or less at room temperature in case that high molecular acrylic monomers are used as described in Patent document 1.

The extent of conventional technology has not been able to provide materials having such extremely fast gelation speed for these industrial requests. Thus, development of new materials has been required so far.

Patent document 1: Japanese Patent Laid-Open No. 2002-30194

### DISCLOSURE OF THE INVENTION

### PROBLEM TO BE SOLVED BY THE INVENTION

Therefore, the problem to be solved by the present invention is to provide a new material which gelates in one hour or less, preferably in several minutes or less at room temperature, and can develop a satisfactory capability for practical use.

### MEANS FOR SOLVING PROBLEM

Thus, the inventors of the present invention have investigated zealously to solve the above problems, found and reached the present invention that extremely fast gelation speed can be realized by combining a plastisol composition in which fine particles of a thermoplastic polymer are dispersed and an organic solvent having high dissolving power to the polymer.

Namely, the gist of the present invention resides in a two-pack type plastisol composition comprising two liquid compositions (LA) and (LB), characterized in that the composition (LA) is a dispersed liquid composition comprising, as indispensable components, fine acrylic polymer particles (A) and a dispersion medium (B) in which the particles (A) are substantially insoluble at room temperature, and
the composition (LB) is a liquid composition comprising an organic solvent (C) which is an indispensable component and has sufficiently high dissolving power for which gelation is progressed within one hour or less at room temperature when 100 parts by weight of the fine polymer particles (A) and 10 to 500 parts by weight of the organic solvent (C) are mixed, and resides in a method of use of the two-pack type plastisol composition comprising the steps of mixing said each liquid composition just before its use and extruding the resulting composition to a base material to be adhered.

### EFFECT OF THE INVENTION

According to the present invention, storage stability at room temperature and rapid gelation after mixing can be developed by using a two-pack type plastisol.

In addition, it becomes possible to combine the rapid gelation and the reduction of volatility at the time of heating by using an organic solvent having reactive functional group as the one promoting gelation.

Therefore, the industrial significance and the effect of the present invention bringing to the earth environmental protection are outstanding.

### BEST MODE FOR CARRYING OUT THE INVENTION

The present invention is explained in detail as follows:
At first, as for the definition of the term in the present invention, when "gelation time" is used in the present invention, this means the time measured by the following technique. In general, in measurement of dynamic viscoelasticity of a material, a gel point is defined as a ratio of loss elastic modulus G" to storage elastic modulus G', namely the point of G"/ G' (= tan δ) becoming equal to one, so that "gelation time" in the present invention is defined as the time necessary for which the tan δ becomes one for the first time when starting the measurement of dynamic viscoelasticity with time immediately after mixing the two-pack type plastisol (tan δ at this point is larger than one).

In addition, when gelation speed is too fast and the measurement of dynamic viscoelasticity is not possible in time, the upper limit value can be defined as follows: Namely, dynamic viscoelasticity is measured after the prescribed passing time such as ten minutes or five minutes after mixing, and "gelation time" of a sample is defined as ten minutes or less or five minutes or less if tan δ at this point is one or less.

In addition, the value measured at 30°C is used for the gelation time in the present invention.

According to the present invention, it is indispensable that plastisol should be used in two-pack style in order to realize extremely fast gelation speed having gelation time of one hour or less. Much of one-pack type plastisol is publicly known by prior art such as vinyl chloride sol or acrylic sol, however, for this case, pot life in storage is made much of consideration so that gelation speed is late, and gelation time usually takes several months at room temperature, or several days at the earliest. Therefore, it is far beyond the request of gelation time of one hour or less.

It is indispensable that the gelation time is one hour or less after mixing. Preferably, it is ten minutes or less and more preferably, it is three minutes or less. The reason is why, a matter of course, gelation speed just reflects production speed of products. In case that the gelation speed is 10 minutes or less, the plastisol can be used for a product of line production system. In case that the gelation speed is 3 minutes or less, it becomes in many cases unnecessary to decrease line speed from the current speed.

A preferred combination of each liquid composition (LA) and (LB) of two-pack type plastisol is explained sequentially in the following.

At first, the liquid composition (LA) is a dispersed liquid composition in which fine acrylic polymer particles (A) are dispersed in a dispersion medium (B) in which the particles (A) are substantially insoluble at room temperature. However, the dispersion medium (B) may have dissolving power to the fine polymer particles (A) when heated at a temperature much higher than room temperature.

In addition, the term "room temperature" widely means the whole temperature of indoor atmosphere where the present material is used, however, 25°C is typical temperature in general with the upper limit of around 40°C taking the seasonal change into consideration. Measured values at 25°C are treated as physical properties at room temperature in this specification.

The reason to use fine acrylic polymer particles is why dissolution or gelation by lesser thermal energy can be achieved, and in another word, the gelation speed can be designed faster because the acrylic polymer has weaker intermolecular cohesion than that of the most general vinyl chloride polymer in the field of plastisol.

The reason why the dispersion medium (B) does not dissolve the fine polymer particles (A) at least at room temperature is that the sufficiently long pot life is required at the point before mixing the two-pack type materials and that the use of the composition cannot become possible because gelation goes forward under storing when the dispersion medium has a dissolving power to the fine polymer particles. In the present invention, substantial insolubility shows a condition which thickening ratio of the liquid composition (LA) obtained by mixing the fine polymer particles (A) and the dispersion medium (B) with the prescribed mass ratio described below when storing five days at room temperature is 50% or less. In addition, the dispersion medium may only show insolubility at least at room temperature and it does not care that the dispersion medium may have a dissolving power to the fine polymer particles when heated at the temperature much higher than room temperature.

Next, regarding the liquid composition (LB), an organic solvent (C) having sufficiently high dissolving power at room temperature to the fine acrylic polymer particles (A) for which gelation is progressed within one hour or less at room temperature when 100 parts by weight of the fine polymer particles (A) and 10 t 500 parts by weight of the organic solvent (C) are mixed is an essential component. The reason is because the gelation speed of one hour or less cannot be achieved when the organic solvent (C) cannot quickly dissolve the fine polymer particles at room temperature. The terms "having sufficiently high dissolving power at room temperature" in the present invention means a condition which gelation is progressed within one hour or less at room temperature when the fine polymer particles (A) and the organic solvent (C) are mixed with the prescribed quantity ratio described bellow.

The fine acrylic polymer particles (A) are not limited in particular, and it is possible to widely use a homopolymer or a copolymer of alkyl methacrylate and/or alkyl acrylate, or a copolymer copolymerized with various comonomers when the occasion demands. Concrete examples of usable monomers are described later.

The particle structure of the fine acrylic polymer particles (A) is not limited in particular, and a uniform structure, a core / shell structure, a gradient structure and other hetero-layers structures can be used widely. Also, two or more varieties of particles having different structures can be used together. However, particles having a core / shell structure are preferred in case that long-time pot life before mixing the two-pack type liquids is desired. This is because high performance can be attained by sharing the functions that high solubility by the core polymer is developed and pot life under storing by the shell polymer is developed. Further, particles having a core / shell structure and particles having a uniform structure can be used jointly in order to further enhance the gelation speed.

The production method of the fine acrylic polymer particles (A) is not limited in particular, and an emulsion polymerization method, a soap-free polymerization method, a suspension polymerization method, a micro suspension polymerization method and a dispersion polymerization method and other methods are listed. Above all, an emulsion polymerization method or a soap-free polymerization method is preferable because it is easy to control the particle structure such as a core / shell structure. For example, various publicly known emulsifiers can be employed in case that an emulsion polymerization method is applied. Sodium dioctyl sulfosuccinate is listed as a concrete example of the emulsifier.

Examples of usable monomers to obtain the fine acrylic polymer particles (A) are listed below. However, it is not limited to these.

These are (meth)acrylates of linear alkyl alcohols such as methyl (meth)acrylate, ethyl (meth)acrylate, n-butyl (meth)acrylate, i-butyl (meth)acrylate, t-butyl (meth)acrylate, hexyl (meth)acrylate, 2-ethylhexyl (meth)acrylate and octyl (meth)acrylate, or (meth)acrylates of cyclic alkyl alcohols such as cyclohexyl (meth)acrylate.

These are monomers having carboxyl group such as methacrylic acid, acrylic acid, itaconic acid, crotonic acid, maleic acid, fumaric acid, 2-methacryloyloxy ethyl succinic acid, 2-methacryloyloxy ethyl maleic acid, 2-methacryloyloxy ethyl phthalic acid and 2-methacryloyloxy ethyl hexahydro phthalic acid; and monomers having acid group including monomers having sulfonic acid group such as allyl sulfonic acid and (meth)acrylates having phosphoric acid group such as 2-(meth)acryloyloxy ethyl acid phosphate.

These are monomers having various functional groups including (meth)acrylates having hydroxy group such as 2-hydroxyethyl (meth)acrylate, 2-hydroxypropyl (meth)acrylate; (meth)acrylates having carbonyl group such as acetoacetoxyethyl (meth)acrylate; and (meth)acrylate having amino group such as N-dimethylaminoethyl (meth)acrylate and N-diethylaminoethyl (meth)acrylate.

These are polyfunctional monomers including multi-functional (meth)acrylates such as (poly)ethylene glycol di(meth)acrylate, propylene glycol di(meth)acrylate, 1,6-hexanediol di(meth)acrylate and trimethylolpropane tri(meth)acrylate.

Also, these include specific monomers including acrylamide and derivatives thereof such as diacetone acrylamide, N-methylolacrylamide, N-methoxy methylacrylamide, N-ethoxy methylacrylamide and N-butoxy methylacrylamide, and further, styrene and derivatives thereof, vinyl acetate, urethane-modified acrylates, epoxy-modified acrylates and silicone-modified acrylates.

Now, the two-pack type plastisol composition of the present invention can gelate rapidly at room temperature by mixing and can get an elastic modulus having a satisfactory level for practical use, however, there is a request for some applications to provide further the improvement of mechanical properties such as elastic modulus and strength.

Also, there is a request to reduce the quantity of volatile organic compounds (VOC) as much as possible when considering the compatibility to the side of environment because VOC quantity discharged into atmosphere increases in case volatile organic solvents are contained in the materials after gelling.

Because of the above reason, it is preferred that the organic solvent (C) contained in the two-pack type plastisol composition is a good solvent that can rapidly dissolve the fine polymer particles at the initial stage, while it can remain in the material without volatization at the late stage.

To satisfy such a demand, as the organic solvent (C) to be used for the present invention, it is preferable to use a compound having a radical-polymerizable double bond, a compound having an epoxy group or a hydroxy group or a plasticizer having high dissolving power to the polymer. Further, these compounds can be used together.

Above all, it is preferable to use a compound having a radical-polymerizable double bond because it becomes possible to make high molecular mass and control the volatility by polymerizing under an selected condition with a selection of various initiators and accordingly, it becomes possible to improve the mechanical properties such as elastic modulus and strength of the molded article after gelation.

In addition, the compound having a radical-polymerizable double bond is preferable because it generally has high dissolving power to the fine acrylic polymer particles so that extremely rapid gelation speed can be attained by making it contain in the liquid composition (LB).

Also, for this case, it is preferable that a radical polymerization initiator is contained in either the liquid composition (LA) or the liquid composition (LB). A kind and quantity of the radical polymerization initiator is not limited in particular, however, it is preferable to use a radical polymerization initiator in an amount of 0.1 to 5 parts by mass, preferably 0.5 to 2 parts by mass to 100 parts by mass of the compound having a radical-polymerizable double bond as the organic solvent (C). In addition, radical polymerization initiators having any decomposition speed, namely ten hour's half-life temperature can be chosen too.

However, the ten hour's half-life temperature is necessary to be selected appropriately in accordance with the pot life required when the pot life before mixing the two-pack type liquids is required for a long term and a radical polymerization initiator is distributed in the liquid composition (LB), and attention is necessary because the individual pot life of the liquid composition (LB) alone becomes shorter when using ones with excessively low ten hour's half-life temperature.

In addition, when a radical polymerization initiator is distributed in the liquid composition (LA), attention is necessary because the individual pot life of the liquid composition (LA) alone becomes shorter since a radical polymerization initiator has high solubility to the fine acrylic polymer particles depending on the kind of said polymerization initiator.

Examples of radical polymerization initiators are listed below, however, it is not limited to these.

These include organic peroxides such as lauroyl peroxide (ten hour's half-life temperature = 62°C), stearoyl peroxide (ten hour's half-life temperature = 62°C), 1,1,3,3-tetramethylbutyl peroxy-2-ethyl hexanoate (ten hour's half-life temperature = 65°C), t-hexyl peroxy-2-ethyl hexanoate (ten hour's half-life temperature = 70°C), t-butyl peroxy-2-ethyl hexanoate (ten hour's half-life temperature = 72°C), benzoyl peroxide (ten hour's half-life temperature = 73°C), di-t-butyl peroxy-2-methylcyclohexane (ten hour's half-life temperature = 83°C), 1,1-bis(t-hexyl peroxy)-3,3,5-trimethylcyclohexane (ten hour's half-life temperature = 87°C), 1,1-bis(t-hexyl peroxy) cyclohexane (ten hour's half-life temperature = 87°C), 1,1-bis(t-butyl peroxy)-3,3,5-trimethylcyclohexane (ten hour's half-life temperature = 90°C), 1,1-bis(t-butyl peroxy) cyclohexane (ten hour's half-life temperature = 91°C), 1,1-bis(t-butyl peroxy) cyclododecane (ten hour's half-life temperature = 95°C), t-hexyl peroxy isopropyl carbonate (ten hour's half-life temperature = 95°C), t-butyl peroxy-3,5,5-trimethylhexanoate (ten hour's half-life temperature = 97°C), t-butyl peroxy laurate (ten hour's half-life temperature = 98°C), t-butyl peroxy isopropyl carbonate (ten hour's half-life temperature = 99°C), t-butyl peroxy-2-ethylhexyl carbonate (ten hour's half-life temperature = 99°C), t-hexyl peroxy benzoate (ten hour's half-life temperature = 99°C), t-pentyl peroxy benzoate (ten hour's half-life temperature =100°C), 2,2-bis(t-butyl peroxy) butane (ten hour's half-life temperature = 103°C), t-butyl peroxy benzoate (ten hour's half-life temperature = 104°C), n-butyl-4,4-bis(t-butyl peroxy) valerate (ten hour's half-life temperature = 105°C) and dicumyl peroxide (ten hour's half-life temperature = 116°C); and azo compounds such as 2,2'-azobis(2,4-dimethyl valeronitrile) (ten hour's half-life temperature = 51 °C), 2,2'-azobis(isobutyronitrile) (ten hour's half-life temperature = 65°C), 2,2'-azobis(2-methyl butyronitrile) (ten hour's half-life temperature = 67°C) and 1,1'-azobis(cyclohexane-1-carbonitrile) (ten hour's half-life temperature = 88°C).

The compound having a radical-polymerizable double bond usable for the organic solvent (C) is not limited in particular, however, a compound satisfying the conditions of (1) molecular mass of 200 or less, (2) having many hetero atoms such as oxygen atom and (3) having a functional group with high reactivity such as epoxy group and hydroxy group is preferable and especially methacrylate or acrylate is more preferable. It is because that dissolving power to the fine acrylic polymer particles becomes extremely high, and the possibility of great reduction in gelation time of one hour or less becomes high when any one of the above conditions (1) to (3) is satisfied. In addition, when the condition (3) is satisfied, much more increase in molecular mass can be achieved by distributing compounds reactive with these functional groups in the plastisol composition. As a result, it can contribute to further reduction in VOC and further improvement of the mechanical properties of gel. Furthermore, these radical-polymerizable compounds can be used together with two kinds or more.

Examples of extremely preferable organic solvent (C) satisfying any one of the above conditions (1) to (3) are listed below.

These are methyl (meth)acrylate, ethyl (meth)acrylate, butyl (meth)acrylate, glycidyl (meth)acrylate, 2-hydroxyethyl (meth)acrylate, 2-hydroxypropyl (meth)acrylate, 2-ethylhexyl (meth)acrylate, tetrahydrofurfuryl (meth)acrylate, benzyl (meth)acrylate, allyl methacrylate and polyethylene glycol di(meth)acrylate.

When compounds having a radical-polymerizable double bond are used as the organic solvent (C), it is extremely preferable that additional heating after gelation once by mixing two-packed liquids is further possible. For example, this material is gelated once in the first half of a production line to give a minimum mechanical characteristic necessary for passing the line and then is heated again in the latter half of the production line to get the high material strength.

As compounds having epoxy group or hydroxy group usable as the organic solvent (C), compounds having epoxy group and hydroxy group such as glycidol, compounds having epoxy group such as methyl glycidyl ether, butyl glycidyl ether and phenyl glycidyl ether and compounds having hydroxy group such as ethylene glycol, propylene glycol and polypropylene glycol are listed.

According to the present invention, it is preferable to use various plasticizers as the organic solvent (C), too. The reason is because many of plasticizers on the market have a sufficiently high compatibility to the fine acrylic polymer particles (A), and have a dissolving power to attain a quick gelation when two-packed liquids are mixed and it makes effective to control VOC even if a plasticizer remains in the products after gelation because of sufficiently low volatility.

Kind of plasticizers usable for the organic solvent (C) is not limited in particular, however, as examples of preferable plasticizers, (1) the ones having hetero atoms such as oxygen atom (preferably having a lot of ether linkage), (2) the ones having few bulky substituents (for example, a linear alkyl chain is preferred to a branched alkyl chain) and (3) the ones having as low molecular mass as possible are listed. The concrete examples of preferable plasticizers are benzoates, phosphates and especially the ones having an alkylene glycol ether unit such as ethylene glycol ether unit are listed. Further, at least two of these plasticizers can be used together.

According to the present invention, it is preferable to use various plasticizers as the dispersion medium (B). This reason is because the sufficiently low volatility of the plasticizer can control volatilization into the air as VOC from the molded article after gelation. In addition, it is preferable for some uses because flexibility and elongation can be provided to a molded article after gelation if a plasticizer having sufficient compatibility with fine polymer particles is selected.

Kind of plasticizers usable as the dispersion medium (B) are not limited in particular, however, it is preferable to have sufficiently low dissolving power to the fine acrylic polymer particles (A) at room temperature and it is more preferable to have sufficient compatibility with the fine acrylic polymer particles (A) after heating. As concrete examples of these, phthalates such as diisononyl phthalate, dioctyl phthalate and didecyl phthalate, esters of dibasic acids such as dioctyl succinate and dioctyl sebacate, trimellitates such as trioctyl trimellitate and phenyl alkyl sulfonates are listed. Further, at least two of these plasticizers can be used together.

In the liquid composition (LA) of the present invention, the blending ratio of the fine acrylic polymer particles (A) to the dispersion medium (B) is not limited in particular, however, it is desirable that preferably 60 parts by mass or more and more preferably 80 parts by mass or more to 100 parts by mass of the fine acrylic polymer particles (A) may be blended in consideration of the handling properties of the liquid composition (LA). On the other hand, a target gelation time may not be achieved even though the liquid composition (LA) and the liquid composition (LB) are mixed when the amount of dispersion medium (B) becomes excessively much so that preferably 200 parts by mass or less and more preferably 150 parts by mass or less of the dispersion medium (B) to 100 parts by mass of the fine acrylic polymer particles (A) may be blended as the upper limit.

The mixing ratio of the liquid composition (LA) to the liquid composition (LB) may be selected suitably in accordance with the respective composition of the liquid composition (LA) and the liquid composition (LB) or the target gelation speed. Additionally, it is not limited unconditionally by the kinds of the organic solvent (C) as the indispensable component of the liquid composition (LB), however, the organic solvent (C) is blended in an amount of 10 parts by mass or more and preferably in an amount of 20 parts by mass or more to 100 parts by mass of the fine acrylic polymer particles (A). As to the upper limit, the organic solvent (C) is blended in an amount of 500 parts by mass or less and preferably in an amount of 200 parts by mass or less to 100 parts by mass of the fine acrylic polymer particles (A) because a deterioration of the original characteristics of the plastisol may happens when using too much quantities.

According to the two-pack type plastisol composition of the present invention, it is preferable to contain an epoxy resin in at least one of the liquid composition (LA) and the liquid composition (LB). This reason is because the material can be adhered strongly to an inorganic material by the high adhesive strength which an epoxy resin has. Publicly known epoxy resins such as bisphenol-A type epoxy resins, bisphenol-F type epoxy resins, polyfunctional epoxy resins, flexible epoxy resins, glycidyl ester type epoxy resins, high molecular type epoxy resins and biphenyl type epoxy resins are widely usable, and are not limited particularly.

In addition, for this case, a hardener for the epoxy resin can be blended with either of (LA) or (LB) when the occasion demands. Examples of the hardener are listed below, however, it is not limited to these.

These are amine compounds such as aliphatic polyamines, polyaminoamides (polyamide resins), aromatic diamines, alicyclic diamines, imidazoles and tertiary amines, acid anhydrides such as maleic anhydride and phthalic anhydride. In addition, phenol resins, amino resins, mercaptans, dicyandiamides, Lewis acid complex compounds and microcapsule type hardeners are listed, too. Above all, the hardeners having latency such as dicyandiamides and microcapsule type hardeners are preferable from a point of pot life before mixing.

According to the present invention, fillers such as calcium carbonate, aluminum hydroxide, microballoon, colloidal silica powder, pearlite, clay, mica powder, silica sand, diatomite, kaolin, talc, bentonite, glass powder, aluminum oxide, fly ash and volcanic ash balloon may be blended when the occasion demands.

According to the present invention, pigments such as titanium oxide and carbon black, diluents such as mineral turpentine and mineral spirit, antifoamers, mildewproofing agents, deodorants, antimicrobials, surfactants, lubricants, ultraviolet absorbers, perfume, foaming agents, leveling agents, adhesives such as blocked isocyanates and its hardener and so forth can be further blended freely when the occasion demands.

It is preferable to use the two-pack type plastisol composition of the present invention to adhere to the base material wherein the liquid compositions (LA) and (LB), both composing said plastisol composition, are mixed just before its use. A method of mixing is not limited in particular, however, the static mixer which can mix easily them in-line or various sprays for two-pack type liquids are listed.

Base materials are not limited in particular, however, it is preferable to employ adhesion to inorganic base materials as a purpose. Metal sheets such as various steel sheets, aluminum sheets, stainless steel sheets, iron sheets, galvanized sheets, chrome plated sheets and tin sheets, and inorganic building materials such as concrete, mortar, gypsum boards, ceramic tiles, ceramic sheets and slate sheets are listed.

When epoxy resins in particular are blended, high adhesiveness can be provided for these inorganic base materials.

For a concrete use, various adhesives, sealing agents, coating materials, vibration control agents, soundproof agents, backing agents and so on are listed, however, it is not limited to these.

### EXAMPLE

The present invention will be explained by using examples. However, the present invention is not limited to only these examples. In addition, "part" means a part by mass in the following description.

### [Preparation of polymer (A1)]

To a four-necked flask of 500ml equipped with a thermometer, a nitrogen gas introduction pipe, a stirrer, a dropping funnel and a cooling pipe, 100 g of pure water was added and nitrogen gas was ventilated sufficiently for 30 minutes to substitute dissolved oxygen in pure water. After stopping nitrogen gas ventilation, the flask was heated to 80°C while stirring with 200 rpm. When the internal temperature reached 80°C, 0.30 g of potassium persulfate was added and a mixture of uniformly dissolved monomers (30 g of methyl methacrylate and 20 g of n-butyl methacrylate), a chain transfer agent (0.01 g of n-octyl mercaptan to 100 g of the monomer) and an emulsifier (0.5 g of sodium dioctylsulfosuccinate to 100 g of the monomer) was added dropwise as a first dropping with a speed of 20 g/hr. Then, a mixture of uniformly dissolved monomers (45 g of methyl methacrylate and 5 g of n-butyl methacrylate), a chain transfer agent (0.01 g of n-octyl mercaptan to 100 g of the monomer) and an emulsifier (0.5 g of sodium dioctylsulfosuccinate to 100 g of the monomer) was added dropwise as a second dropping with a speed of 20 g/hr. After the end of dropping, stirring was continued for one hour at 80°C to get a polymer latex.

After cooling the resultant polymer latex to room temperature, the fine polymer particles (A1) were obtained by spray drying with a spray dryer (Ohkawara Kakohki Co., Ltd.; L8 type), under the condition of 150°C of the inlet temperature, 65°C of the outlet temperature and 25000 rpm of an atomizer.

### [Preparation of polymer (A2)]

To a four-necked flask of 500ml equipped with a thermometer, a nitrogen gas introduction pipe, a stirrer, a dropping funnel and a cooling pipe, 100 g of pure water was added and nitrogen gas is ventilated sufficiently for 30 minutes to substitute dissolved oxygen in pure water. After stopping nitrogen gas ventilation, the flask was raised to 80°C while stirring with 200 rpm. When the internal temperature reached 80°C, 0.30 g of potassium persulfate was added and a mixture of uniformly dissolved monomers (42 g of methyl methacrylate and 28 g of n-butyl methacrylate) and an emulsifier (0.5 g of sodium dioctylsulfosuccinate to 100 g of the monomer) was added dropwise as a first dropping with a speed of 20 g/hr. Then, a mixture of uniformly dissolved monomers (28.5 g of methyl methacrylate and 1.5 g of methacrylic acid) and an emulsifier (0.5g of sodium dioctylsulfosuccinate to 100 g of the monomer) was added dropwise as a second dropping with a speed of 20 g/hr. After the end of dropping, stirring was continued for one hour at 80°C to get a polymer latex.

After cooling the resultant polymer latex to the room temperature, the fine polymer particles (A2) were obtained by spray drying with a spray dryer (Ohkawara Kakohki Co., Ltd.; L8 type), under the condition of 150°C of the inlet temperature, 65°C of the outlet temperature and 25000 rpm of an atomizer.

### [Preparation of polymer (A3)]

To a four-necked flask of 500 ml equipped with a thermometer, a nitrogen gas introduction pipe, a stirrer, a dropping funnel and a cooling pipe, 100 g of pure water was added and nitrogen gas is ventilated sufficiently for 30 minutes to substitute dissolved oxygen in pure water. After stopping nitrogen gas ventilation, the flask was heated to 80°C while stirring with 200rpm. When the internal temperature reached 80°C, 0.30 g of potassium persulfate was added a mixture of uniformly dissolved monomers (85 g of methyl methacrylate and 15 g of n-butyl acrylate), a chain transfer agent (0.005 g of n-octyl mercaptan to 100 g of the monomer) and an emulsifier (0.5 g of sodium dioctylsulfosuccinate to 100 g of the monomer) was added dropwise as a first dropping with a speed of 20 g/hr. After the end of dropping, stirring was continued for one hour at 80°C to get a polymer latex.

After cooling the resultant polymer latex to the room temperature, the fine polymer particles (A3) were obtained by spray drying with a spray dryer (Ohkawara Kakohki Co., Ltd.; L8 type), under the condition of 190°C of the inlet temperature, 85°C of the outlet temperature and 25000 rpm of an atomizer.

**[TABLE 1]**

| | Core composition (mass %) | Shell composition (mass %) | Core/shell ratio |
|---|---|---|---|
| A1 | MMA/nBMA=60/40 | MMA/nBMA=90/10 | 50/50 |
| A2 | MMA/nBMA=60/40 | MMA/MAA=95/5 | 70/30 |
| A3 | MMA/nBA=85/15 | - | - |

Abbreviations in the table mean the following.
MMA: Methyl methacrylate
nBMA: n-Butyl methacrylate
MAA: Methacrylic acid
nBA: n-Butyl acrylate

### [Preparation of liquid composition (LA 1)]

Liquid composition (LA 1) was obtained by defoaming-stirring (mixing for 50 seconds at reduced pressure of 2.67 kPa (20mmHg) after mixing for 10 seconds at atmospheric pressure) of 100 parts of the fine polymer particle (A1) and 100 parts of diisononyl phthalate being a plasticizer as a dispersion medium with a vacuum mixer (ARV-200 made by Thinky Co.).

### [Preparation of liquid compositions (LA 2)-(LA 4)]

Liquid compositions (LA 2)-(LA 4) were prepared in the same manner as the liquid composition (LA 1). However, the fine polymer particles and the dispersion mediums were changed for the compositions as described in Table 2. The mixing conditions with the mixer and so on were the same in the case of the liquid composition (LA 1).

**[TABLE 2]**

| | Fine polymer particles (parts) | Dispersion medium (parts) | Viscosity (mPa•s) | Storage stability (%) |
|---|---|---|---|---|
| LA 1 | A1 (100) | DINP (100) | 4500 | ⊚ (15) |
| LA 2 | A2 (100) | ATBC (100) | 3200 | ○ (30) |
| LA 3 | A1/A3 (50/50) | DINP (100) | 1580 | ○ (22) |
| LA 4 | A1 (100) | GMA (100) | - | × (gelation) |

Abbreviations in the table mean the following.
DINP: Diisononyl phthalate
ATBC: Acetyl tributyl citrate
GMA: Glycidyl methacrylate

### [Preparation of liquid composition (LB 1)]

Liquid composition (LB 1) was obtained by defoaming-stirring (mixing for 50 seconds at reduced pressure of 2.67 kPa (20mmHg) after mixing for 10 seconds at atmospheric pressure) of 100 parts of glycidyl methacrylate and 100 parts of 2-hydroxyethyl acrylate as organic solvents, and 2.0 parts of t-pentyl peroxy benzoate (KD-1 made by Kayaku Akzo Co.) as a radical polymerization initiator with a vacuum mixer (ARV-200 made by Thinky Co.).

### [Preparation of liquid compositions (LB 2)-(LB 11)]

Liquid compositions (LB 2)-(LB 11) were prepared in the same manner as the liquid composition (LB 1). However, organic solvents and radical polymerization initiators were changed for the compositions as described in Table 3. The mixing conditions with the mixer and so on were the same in the case of the liquid composition (LB 1).

**[TABLE 3]**

| | Organic solvent (parts) | Polymerization initiator (parts) | Viscosity (mPa•s) | Storage stability (%) |
|---|---|---|---|---|
| LB 1 | GMA (100) | KD-1 (2.0) | 2.5 | ⊚ (0) |
| LB 2 | nBA (100) | AN (2.0) | 0.8 | ⊚ (0) |
| LB 3 | HEA (100) | KD-1 (2.0) | 5.7 | ⊚ (0) |
| LB 4 | HEMA (100) | KD-1 (2.0) | 6.8 | ⊚ (0) |
| LB 5 | HPMA (100) | KD-1 (2.0) | 9.3 | ⊚ (0) |
| LB 6 | THFMA (100) | AN (2.0) | 2.8 | ⊚ (0) |
| LB 7 | EHMA (100) | AN (2.0) | 1.9 | ⊚ (0) |
| LB 8 | Glycidol (100) | - | 4.0 | ⊚ (0) |
| LB 11 | DOP (100) | - | 95 | ⊚ (0) |
| LB 12 | PEG-A (100) | BPO (0.3) | 78 | ⊚ (0) |

Abbreviations in the table mean the following.
GMA: Glycidyl methacrylate
nBA: n-Butyl acrylate
HEA: 2-Hydroxyethyl acrylate
HEMA: 2-Hydroxyethyl methacrylate
HPMA: 2-Hydroxypropyl methacrylate
THFMA: Tetrahydrofurfuryl methacrylate
EHMA: 2-Ethylhexyl methacrylate
PEG-A: Methoxy polyethylene glycol acrylate (molecular mass 482)
DOP: Di-2-ethylhexyl phthalate
KD-1: t-Pentyl peroxy benzoate
AN: t-Pentyl peroxy-3,5,5-trimethylhexanoate
BPO: Benzoyl peroxide

The resultant plastisol compositions were evaluated about the following items. Concrete subject matters of the evaluation methods are shown in the following.

### [Viscosity]

Viscosity was measured at measuring temperature of 25°C with a rotation of 2 rpm by using Brookfield type viscometer (made by Toki Sangyo Co., Ltd., BH type viscometer, No. 7 rotor) at one hour later after preparing the liquid composition (LA).

Viscosity was measured at measurement temperature of 25°C with rotation of 30 rpm by using Brookfield type viscometer (made by Toki Sangyo Co., Ltd., BL type viscometer, BL adaptor) at one hour later after preparing the liquid composition (LB).

### [Storage stability]

Viscosity was measured again for the liquid composition which had been stored in a thermostatic damper maintained at 25°C and taken out after 5 day's keeping. The storage stability was evaluated by calculating a thickening ratio of the liquid composition as follows:
{(viscosity after storing / initial viscosity) -1} × 100 (%)
⊚: Less than 20%
○: Less than 50%, 20% or more
Δ: 50% or more
×: evaluation impossible (gelation)

### [Gelation time]

To a curelastometer (made by JSR Trading Co., Ltd., curelastometer WP type), 10g of the liquid composition in which the ratio of (LA) / (LB) was being adjusted to 2 / 1 and the temperature was being adjusted to 30°C was charged while mixing through a static mixer. The measurement was started immediately and the time till becoming tan δ < 1 was determined as the gelation time.

A measurement condition:
Dice diameter =φ40mm,
dice temperature = 30°C,
amplitude angle = ±1°.

⊚: 10 minutes or less,
○: 60 minutes or less,
×: more than 60 minutes.

### [Example 1]

As the liquid compositions, (LA 1) and (LB 1) were adjusted to 30°C and were charged to a curelastometer while stirring with a static mixer so that the ratio of (LA) / (LB) became to be 2 / 1and the gelation time was measured. The gelation time was 2.0 minutes and it showed good gelation property.

### [Examples 2-13, Comparative examples 1 and 2]

Gelation times were measured by using the compositions shown in Table 4 as the liquid compositions. Measured results were shown in Table 4.

### [Comparative example 3]

The liquid composition (LA 4) was prepared by 100 parts of the fine polymer particles (A1) and 100 parts of glycidyl methacrylate as the dispersion medium. However, this plastisol began to thicken immediately after mixing, and it gelated rapidly to show poor storage stability.

**[Table 4]**

| | LA | LB | Gelation time (minutes) |
|---|---|---|---|
| Example 1 | LA1 | LB1 | ⊚ (2.0) |
| Example 2 | LA1 | LB2 | ⊚ (3.4) |
| Example 3 | LA1 | LB3 | ⊚ (1.0) |
| Example 4 | LA1 | LB4 | ⊚ (1.3) |
| Example 5 | LA1 | LB5 | ⊚ (2.5) |
| Example 6 | LA1 | LB6 | ○ (10.5) |
| Example 7 | LA1 | LB7 | ○ (25.0) |
| Example 8 | LA1 | LB8 | ⊚ (4.5) |
| Example 9 | LA2 | LB1 | ⊚ (1.8) |
| Example 10 | LA2 | LB4 | ⊚ (3.5) |
| Example 11 | LA3 | LB1 | ⊚ (1.4) |
| Example 12 | LA3 | LB4 | ⊚ (1.2) |
| Example 13 | LA3 | LB5 | ⊚ (1.8) |
| Comparative example 1 | LA1 | LB11 | × (>60) |
| Comparative example 2 | LA2 | LB12 | × (>60) |

### [Consideration of each example]

All examples and comparative examples are considered in the following.

### <Examples 1 to 7>

Examples 1 to 7 show examples using polymer particles (A1) having the core/shell structure as the polymer particles (A) of liquid composition (LA), diisononyl phthalate as the dispersion medium (B), an acrylic monomer having a radical-polymerizable double bond as the organic solvent (C) of liquid composition (LB) and a radical polymerization initiator. Good gelation property was shown when these two liquids were mixed.

### <Example 8>

Example 8 shows an example using polymer particles (A1) having the core/shell structure as the polymer particles (A) of liquid composition (LA), diisononyl phthalate as the dispersion medium (B) and glycidol, which has a hydroxy group and epoxy group, as the organic solvent (C) of liquid composition (LB). Good gelation property was shown when these two liquids were mixed.

### <Examples 9 and 10>

Examples 9 and 10 show examples using polymer particles (A2) having the core/shell structure as the polymer particles (A) of liquid composition (LA), acetyl tributyl citrate as the dispersion medium (B), an acrylic monomer having a radical-polymerizable double bond as the organic solvent (C) of liquid composition (LB) and a radical polymerization initiator. Good gelation property was shown when these two liquids were mixed.

### <Examples 11 to 13>

Examples 11 to 13 show examples using combination of polymer particles (A1) having the core/shell structure and polymer particles (A3) having a uniform structure as the polymer particles (A) of liquid composition (LA), diisononyl phthalate as the dispersion medium (B), an acrylic monomer having a radical-polymerizable double bond as the organic solvent (C) of liquid composition (LB) and a radical polymerization initiator. Good gelation property was shown when these two liquids were mixed.

### <Comparative example 1>

Example 8 shows an example using polymer particles (A1) having the core/shell structure as the polymer particles (A) of liquid composition (LA), diisononyl phthalate as the dispersion medium (B) and di-2-ethylhexyl phthalate as liquid composition (LB). Gelation property was insufficient because no gelation was observed within 60 minutes after these two liquids were mixed.

### <Comparative example 2>

Example 8 shows an example using polymer particles (A2) having the core/shell structure as the polymer particles (A) of liquid composition (LA), diisononyl phthalate as the dispersion medium (B), an acrylic monomer having a radical-polymerizable double bond which is disclosed in Japanese Patent Laid-Open No. 2002-30194 as liquid composition (LB) and benzoyl peroxide as a radical polymerization initiator. Gelation property was insufficient because no gelation was observed within 60 minutes after these two liquids were mixed.

### <Comparative example 3>

Comparative example 3 shows an example using polymer particles (A2) having the core/shell structure as the polymer particles (A) of liquid composition (LA) and glycidyl methacrylate as the dispersion medium (B). At this case, the storage stability of the liquid composition (LA 4) was poor, so that it does not meet the object of the present invention.

### INDUSTRIAL APPLICABILITY

According to the two-pack type plastisol of the present invention, the storage stability at room temperature and rapid gelation after mixing can be developed and it can be available widely in the field of various industries.

## Claims

1. A two-pack type plastisol composition comprising two liquid compositions (LA) and (LB), **characterized in that**:
the composition (LA) is a dispersed liquid composition comprising, as indispensable components, fine acrylic polymer particles (A) and a dispersion medium (B) in which the particles (A) are substantially insoluble at room temperature, and
the composition (LB) is a liquid composition comprising an organic solvent (C) which is an indispensable component and has sufficiently high dissolving power for which gelation is progressed within one hour or less at room temperature when 100 parts by weight of the fine polymer particles (A) and 10 to 500 parts by weight of the organic solvent (C) are mixed.

2. The two-pack type plastisol composition according to claim 1, wherein the organic solvent (C) is at least one selected from the group consisting of a compound having a radical-polymerizable double bond, a compound having an epoxy group or a hydroxyl group and a plasticizer comprising at least one of benzoates and phosphates having an alkylene glycol ether unit.

3. The two-pack type plastisol composition according to claim 1 or 2, **characterized in that** the organic solvent (C) is a compound having a radical-polymerizable double bond and a radical-polymerization initiator is contained in either the liquid composition (LA) or the liquid composition (LB).

4. The two-pack type plastisol composition according to claim 1, **characterized in that** the organic solvent (C) is a plasticizer.

5. The two-pack type plastisol composition according to any one of claims 1 to 4, **characterized in that** the organic solvent (C) having epoxy group or hydroxy group.

6. The two-pack type plastisol composition according to any one of claims 1 to 5, **characterized in that** at least one of the liquid composition (LA) and the liquid composition (LB) contains an epoxy resin.

7. Use of two-pack type plastisol composition comprising the liquid compositions (LA) and (LB) according to any one of claims 1 to 6, wherein said compositions (LA) and (LB) are mixed just before its use, and extruded to adhere to a base material.

8. Use of two-pack type plastisol composition according to any one of claims 1 to 6 for adhering to an inorganic material.

## Patentansprüche

1. Plastisolzusammensetzung vom Zweikomponenten-Typ, umfassend zwei flüssige Zusammensetzungen (LA) und (LB), **dadurch gekennzeichnet, dass**
die Zusammensetzung (LA) eine dispergierte flüssige Zusammensetzung ist, umfassend als unerlässliche Komponenten feine Acrylpolymerteilchen (A) und ein Dispersionsmedium (B), in welchem die Teilchen (A) bei Raumtemperatur im Wesentlichen unlöslich sind, und
die Zusammensetzung (LB) eine flüssige Zusammensetzung ist, umfassend ein organisches Lösungsmittel (C), welches eine unerlässliche Komponente ist und ausreichend hohes Auflösungsvermögen aufweist, für welches Gelierung innerhalb einer Stunde oder weniger bei Raumtemperatur voranschreitet, wenn 100 Gewichtsteile der feinen Polymerteilchen (A) und 10 bis 500 Gewichtsteile des organischen Lösungsmittels (C) gemischt werden.

2. Plastisolzusammensetzung vom Zweikomponenten-Typ nach Anspruch 1, wobei das organische Lösungsmittel (C) mindestens eines ist, gewählt aus der Gruppe, bestehend aus einer Verbindung mit einer radikalisch polymerisierbaren Doppelbindung, einer Verbindung mit einer Epoxygruppe oder einer Hydroxylgruppe, und einem Weichmacher, umfassend mindestens eines aus Benzoaten und Phosphaten mit einer Alkylenglykolethereinheit.

3. Plastisolzusammensetzung vom Zweikomponenten-Typ nach Anspruch 1 oder 2, **dadurch gekennzeichnet, dass** das organische Lösungsmittel (C) eine Verbindung mit einer radikalisch polymerisierbaren Doppelbindung ist, und wobei ein Radikal-Polymerisationsinitiator entweder in der flüssigen Zusammensetzung (LA) oder der flüssigen Zusammensetzung (LB) enthalten ist.

4. Plastisolzusammensetzung vom Zweikomponenten-Typ nach Anspruch 1, **dadurch gekennzeichnet, dass** das organische Lösungsmittel (C) ein Weichmacher ist.

5. Plastisolzusammensetzung vom Zweikomponenten-Typ nach mindestens einem der Ansprüche 1 bis 4, **dadurch gekennzeichnet, dass** das organische Lösungsmittel (C) eine Epoxygruppe oder Hydroxygruppe aufweist.

6. Plastisolzusammensetzung vom Zweikomponenten-Typ nach mindestens einem der Ansprüche 1 bis 5, **dadurch gekennzeichnet, dass** mindestens eine der flüssigen Zusammensetzung (LA) und der flüssigen Zusammensetzung (LB) ein Epoxyharz enthält.

7. Verwendung einer Plastisolzusammensetzung vom Zweikomponenten-Typ, umfassend die flüssigen Zusammensetzungen (LA) und (LB) nach mindestens einem der Ansprüche 1 bis 6, wobei die Zusammensetzungen (LA) und (LB) unmittelbar vor ihrer Verwendung gemischt und extrudiert werden, um an einem Basismaterial zu haften.

8. Verwendung einer Plastisolzusammensetzung vom Zweikomponenten-Typ nach mindestens einem der Ansprüche 1 bis 6 zur Anhaftung an ein anorganisches Material.

## Revendications

1. Composition de plastisol du type à deux composants comprenant deux compositions liquides (LA) et (LB), **caractérisée en ce que** :
la composition (LA) est une composition liquide dispersée comprenant, en tant que composants indispensables, de fines particules de polymère acrylique (A) et un milieu de dispersion (B) dans lequel les particules (A) sont essentiellement insolubles à température ambiante, et
la composition (LB) est une composition liquide comprenant un solvant organique (C) qui est un composant indispensable et qui a un pouvoir de dissolution suffisamment élevé pour lequel une gélification se produit en l'espace d'une heure ou moins à température ambiante lorsque 100 parties en poids des fines particules de polymère (A) et 10 à 500 parties en poids du solvant organique (C) sont mélangés.

2. Composition de plastisol du type à deux composants selon la revendication 1, dans laquelle le solvant organique (C) est au moins un choisi dans le groupe consistant en un composé ayant une double liaison polymérisable par une polymérisation radicalaire, un composé ayant un groupe époxy ou un groupe hydroxyle et un plastifiant comprenant au moins un parmi des benzoates et des phosphates ayant un motif alkylène glycol éther.

3. Composition de plastisol du type à deux composants selon la revendication 1 ou 2, **caractérisée en ce que** le solvant organique (C) est un composé ayant une double liaison polymérisable par une polymérisation radicalaire et un initiateur de polymérisation radicalaire est contenu soit dans la composition liquide (LA) ou dans la composition liquide (LB).

4. Composition de plastisol du type à deux composants selon la revendication 1, **caractérisée en ce que** le solvant organique (C) est un plastifiant.

5. Composition de plastisol du type à deux composants selon l'une quelconque des revendications 1 à 4, **caractérisée en ce que** le solvant organique (C) a un groupe époxy ou un groupe hydroxyle.

6. Composition de plastisol du type à deux composants selon l'une quelconque des revendications 1 à 5, **caractérisée en ce qu'**au moins une parmi la composition liquide (LA) et la composition liquide (LB) contient une résine époxy.

7. Utilisation d'une composition de plastisol du type à deux composants comprenant les compositions liquides (LA) et (LB) selon l'une quelconque des revendications 1 à 6, dans laquelle lesdites compositions (LA) et (LB) sont mélangées juste avant emploi, et extrudées pour adhérer à un matériau de base.

8. Utilisation d'une composition de plastisol du type à deux composants selon l'une quelconque des revendications 1 à 6 pour adhérer à un matériau inorganique.
